(19) Europäisches Patentamt
European Patent Office
Office européen des brevets

(11) Veröffentlichungsnummer: **0 262 502 B1**

(12) **EUROPÄISCHE PATENTSCHRIFT**

(45) Veröffentlichungstag der Patentschrift: **02.01.92**

(51) Int. Cl.[5]: **C08L 69/00**, C08L 33/12, G11B 7/24, //(C08L69/00,33:12), (C08L33/12,69:00)

(21) Anmeldenummer: **87113430.0**

(22) Anmeldetag: **15.09.87**

# (54) Verträgliche Mischungen aus Polycarbonat und Methylmethacrylat-Copolymeren.

(30) Priorität: **27.09.86 DE 3632946**

(43) Veröffentlichungstag der Anmeldung:
**06.04.88 Patentblatt 88/14**

(45) Bekanntmachung des Hinweises auf die Patenterteilung:
**02.01.92 Patentblatt 92/01**

(84) Benannte Vertragsstaaten:
**DE ES FR GB IT NL**

(56) Entgegenhaltungen:
**EP-A- 0 203 487**
**GB-A- 2 137 935**
**GB-A- 2 146 647**

(73) Patentinhaber: **Röhm GmbH**
**Kirschenallee Postfach 4242**
**W-6100 Darmstadt 1(DE)**

(72) Erfinder: **Munzer, Manfred, Dr.**
**Hunsrückstrasse 15**
**W-6140 Bensheim 1(DE)**
Erfinder: **Wunderlich, Winfried, Dr.**
**Spessartring 11**
**W-6101 Rossdorf 1(DE)**

**EP 0 262 502 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gebiet der Erfindung

Die Erfindung betrifft Polymermischungen. Sie betrifft vor allem solche aus einem aromatischen Polycarbonat, insbesondere dem Polycarbonat von BisphenolA, und einem Methylmethacrylat-Copolymeren, die sich durch hohe Transparenz auszeichnen.

Stand der Technik

Es ist bekannt, aromatische Polycarbonate, vor allem Polycarbonate von BisphenolA, mit anderen Polymeren zu vermischen, wobei Kombinationen erhalten werden, die mehrphasig, also unverträgliche Polymermischungen, sogenannte Polymerblends, oder auch homogen, also verträglich, sein können. Verträgliche Polymermischungen werden auch als Polymer-Legierungen bezeichnet.

Polymethylmethacrylat-Formmasse, ein glasklarer, transparenter Kunststoff gibt mit dem Polycarbonat des BisphenolA, einem ebenfalls transparenten Kunststoff, keine homogenen, transparenten Legierungen, sondern wie u.a. aus der jap. Patentschrift 72 16 063 bekannt ist, Mischungen mit perlartigem Glanz.

Nach der DE-A 22 64 268 wird eine verbesserte Polycarbonat-Formmasse erhalten, wenn dem Polycarbonat ein Acrylpolymeres mit niedrigem Molekulargewicht, das ein aus 90 bis 75 Gew.-% Methylmethacrylat und 10 bis 25 Gew.-% eines Alkylacrylates der Formel

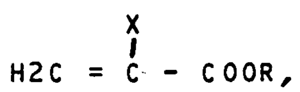

mit X gleich H oder CH3 und R ein organischer Rest mit 4 bis 12 Kohlenstoffatomen, bestehendes Copolymeres ist, zugesetzt wird. Die Menge des Copolymerzusatzes kann 0,01 bis etwa 50 Gew.-% des Gewichtes der Polycarbonatzusammensetzung betragen. Hierdurch wird die Schmelzviskosität des Polycarbonates bzw. der Mischung ohne Beeinträchtigung der Transparenz mit steigendem Copolymer-Zusatz laufend verringert.

Bei diesen Copolymeren handelt es sich also um polymere Weichmacher, deren Molekulargewicht zur Erzielung der beschriebenen Verträglichkeit aufgrund eigener Versuche mit entsprechenden Copolymeren unter 15 000 liegen muß.

Zur Herstellung von Polymerlegierungen, die auch im Bereich hoher Polymethacrylat-Anteile technisch interessante Eigenschaften haben, sind solche Copolymere wegen des bekannten Abfalls der mechanischen Eigenschaften im Molekulargewichtsbereich unter 100 000, insbesondere unter 50 000 (siehe Kunststoff-Handbuch, Band IX, Vieweg/Esser: Polymethacrylate, S. 112 ff) jedoch völlig ungeeignet.

Verträgliche Polymermischungen, die aus einem Polycarbonat, wie dem BisphenolA-Polycarbonat und einem Copolymerisat aus monomeren Estern der Acryl-und/oder Methacrylsäure mit $C_1$-$C_{10}$-Alkoholen und einem UV-absorbierendem Monomeren der Formel

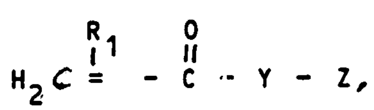

worin $R_1$ für Wasserstoff oder einen Methylrest und Y für Sauerstoff oder einen Rest $NR_2$ mit $R_2$ Wasserstoff oder Alkylrest stehen, und Z ein UV-absorbierender Rest, nämlich ein 2-Hydroxyphenylbenzotriazolrest, ein 2-Hydroxybenzo- oder -acetophenonrest oder ein $\alpha$-Cyano-$\beta$,$\beta$-diphenylrest ist, bestehen, sind in der deutschen Anmeldung P 35 18 538.4 beschrieben.

Solche, auch thermoplastisch verarbeitbare Polymermischungen aus Polycarbonat und Copolymeren des Methylmethacrylats und Monomeren mit ausgeprägtem Absorptionsvermögen für Ultraviolettstrahlung, und die als Lichtschutzmittel zur Verbesserung der Lichtbeständigkeit von z.B. Kunststoffen, insbesondere durch deren Beschichtung dienen, sind nur sehr speziell brauchbare Polymermischungen und von dem hohen Preis der damit eingebrachten UV-Absorber her, für breit anwendbare, thermoplastisch verarbeitbare, Massen, prohibitiv.

Aufgabe und Lösung

Es bestand daher weiter die Aufgabe verträgliche Mischungen mit technisch interessanten Eigenschaften aus thermoplastischem Polycarbonat und thermoplastisch verarbeitbaren Polymerisaten mit hoher Anteilen an Methylmethacrylat und mit Molekulargewichten über 30 000 für ein breites Anwendungsgebiet wie es für Formmassen üblich ist, zu finden.

Es wurde gefunden, daß glasklare Polymethacrylatharze mit Kunststoffeigenschaften und Polycarbonate, wie das Polycarbonat des BisphenolA, das seinerseits zu den schlagzähen, transparenten Kunststoffen zählt, überraschenderweise zu verträglicher und wiederum glasklaren neuen Kunststoffen legiert werden können, wenn als Polymethacrylatharze Copolymerisate mit hohen Anteilen, d.h. 95 bis 65 Gew.-%, Methylmethacrylat und geringen Mengen, d.h. 5 bis 25 Gew.-%, monosubstituierter Acryl- und/oder Methacrylamiden eingesetzt werden.

Dies ist umso überraschender, da nach den allgemeinen Kenntnissen der organischen Chemie, Carbonsäureamide, und zwar solche des Ammoniaks und der primärer Amine, zwischenmolekulare Wasserstoffbrücken ausbilden und, im Gegensatz zu entsprechenden Estern, normalerweise bei gewöhnlicher Temperatur feste, kristallisierende Verbindungen sind, die dadurch eher zu Unverträglichkeiten Anlaß geben sollten.

Die monosubstituierten Acryl- und/oder Methacrylamide, die mit Methylmethacrylat und gegebenenfalls weiteren $\alpha,\beta$-ungesättigten Monomeren copolymerisiert werden und dem Polymethylmethacrylatharz die Verträglichkeit mit dem Polycarbonatharz verleihen, haben die allgemeine Formel I

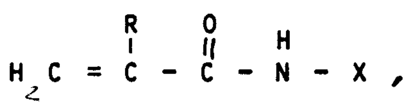 , wobei

I

R  H oder CH3 und
X  ein organischer Rest eines cyclischen, gegebenenfalls substituierten Moleküls mit aliphatischer, aromatischer oder heterocyclischer Struktur

bedeuten.

Beispiele für X sind Cyclohexyl, 2- bzw. 4-Methylcyclohexyl, für Reste cycloaliphatischer Moleküle, Phenyl, Benzyl als Reste aromatischer Moleküle, 2-Thiazolyl als Rest eines Moleküls mit heterocyclischer Struktur. Acryl- bzw. Methacrylamide, die als Comonomere in dem erfindungsgemäß mit dem Polycarbonat verträglichen Polymethacrylatharz enthalten sind, sind danach beispielsweise N-Cyclohexylacrylamid, N-Cyclohexylmethacrylamid, N-2-Methylcyclohexylmethacrylamid, N-Phenylmethacrylamid, N-Benzylmethacrylamid, N-2-Thiazolylmethacrylamid.

Die vorliegende Erfindung ist gerichtet auf eine transparente, thermoplastisch verarbeitbare Polymermischung bestehend aus

(A) einem aromatischen Polycarbonat und

(B) einem Methacrylat-Copolymerisat, wobei das Copolymerisat (B)

1. aus 65 bis 95 Gew.-% Methylmethacrylateinheiten und gegebenenfalls weiteren $\alpha,\beta$-ungesättigten Monomereinheiten in Mengen von 0 bis 20 Gew.-% und

2. aus 5 bis 25 Gew.-% monosubstituierten (Meth)acrylamideinheiten aus Monomeren der allgemeinen Formel

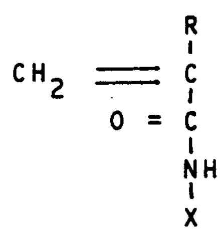

in der R Wasserstoff oder ein Methylrest und X ein organischer Rest eines cyclischen, gegebenenfalls substituierten Moleküls mit aliphatischer oder aromatischer oder heterocyclischer Struktur ist und der organische cyclische Rest kein ausgeprägtes Absorptionsvermögen für sichtbares Licht bis hin zur Ultraviolettstrahlung von 340 nm hat, und x

a) kein 2-Hydroxyphenyl-benzotriazol-Rest bzw. Derivate

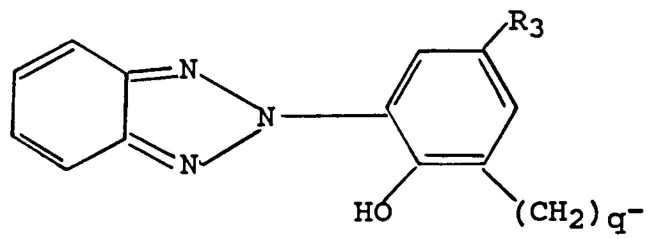

worin $R_3$ für Wasserstoff oder einen gegebenenfalls verzweigten Alkylrest mit 1 bis 12 C-Atomen und q für null oder für eine Zahl von 1 bis 4 stehen kann, steht, und

b) kein 2-Hydroxybenzo- oder -acetophenon-Rest

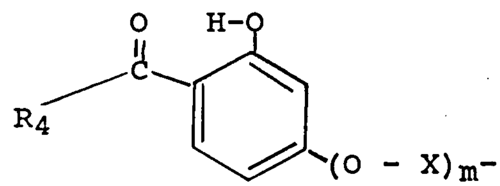

worin m für 0 oder 1 und X für einen gegebenenfalls mit Hydroxygruppen substiuierten Alkylrest mit 1 bis 4 Kohlenstoffatomen und $R_4$ für einen gegebenenfalls substituierten Phenyl- oder Methylrest steht, ist,

3. ein Molekulargewicht über 30 000 hat.

Das Polycarbonat (A) ist insbesondere das Reaktionsprodukt von 2,2-Bis-(4-hydroxyphenyl)-propan, als BisphenolA bekannt, und Phosgen.

Das Copolymerisat (B) und die darin copolymerisierten Monomeren der Formel I zeichnen sich gegenüber den in der deutschen Anmeldung P 35 18 538.4 beschriebenen Copolymerisaten und Monomeren dadurch aus, daß sie vom gesamten optisch-sichtbaren Bereich her bis hin in den UV-Bereich von 340 nm keine wesentliche Absorption haben.

Durchführung der Erfindung

Die erfindungsgemäß mit Polycarbonaten, insbesondere dem Polycarbonat von BisphenolA, verträglichen Polymethacrylatharze, sind im wesentlichen aus Methylmethacrylat aufgebaut. In Mengen von 5 bis 25 Gew.-% enthält erfindungsgemäß das Methacrylatpolymere einpolymerisierte Acryl- und/oder Methacrylamideinheiten oben angegebener Struktur. Das Copolymerisat kann in Mengen von 0 bis 20 Gew.-% weitere Einheiten $\alpha,\beta$-ungesättigter Monomerer, wie z.B. Styrol, $\alpha$-Methylstyrol, Acrylsäure oder deren Ester, enthalten.

Die Herstellung dieser Copolymerisate wird nach bekannten Verfahren zur Polymerisation $\alpha,\beta$-ungesättigter Verbindungen, insbesondere der radikalischen Polymerisation, beispielsweise in Substanz oder in Lösung oder als Perlpolymerisation, durchgeführt. Als radikalische Polymerisationsinitiatoren können dazu Azoverbindungen, wie Azodiisobutyronitril, oder Peroxide, wie Dibenzoylperoxid, Dilauroylperoxid, oder Redoxsysteme dienen, oder die Startradikale können strahlenchemisch erzeugt werden.

Es ist bekannt, daß die Verträglichkeit von Polymeren in Mischungen von ihren Polymerisationsgraden abhängt, und zwar nimmt in der Regel die Verträglichkeit mit steigendem Molekulargewicht der Polymeren ab, wobei die Mischung dann zwei- bzw. mehrphasig wird. Für die Herstellung von Polycarbonat-Polymethacrylat-Legierungen werden erfindungsgemäß Methylmethacrylat-Copolymere eingesetzt, die Molekulargewichte über 30 000, von etwa 30 000 bis 200 000, vorzugsweise etwa 50 000 bis 100 000 haben

und deren reduzierten Viskositäten ηspec/C, gemessen gemäß DIN 51 562, im Bereich von 18 bis 65 ml/g, bevorzugt im Bereich von 30 bis 50 ml/g, liegen. So sind beispielsweise Methylmethacrylat-Copolymerisate mit 6 bis 10 Gew.-% N-Cyclohexylmethacrylamid oder N-Benzylmethacrylamid und einem ηspec/C von 33 ml/g über den gesamten Legierungsbereich mit BisphenolA-Polycarbonat, z.B. Makrolon® 1158, verträglich. Die Herstellung der so molekulargeweichtsgeregelten Copolymerisate wird insbesondere durch Polymerisation in Gegenwart von Übertragungsreglern, wie den dazu bekannten Mercaptanen, durchgeführt.
Die erfindungsgemäßen Polycarbonat-verträglichen Methylmethacrylat-Copolymeren lassen sich zu glasklaren farblosen Formkörpern thermoplastisch verarbeiten, welche Vicat-Erweichungstemperaturen, gemessen nach DIN 53 460, von etwa 100 bis 110 Grad C aufweisen.

Als mit den Methylmethacrylat-(Meth)acrylamid(I)-Copolymerisaten verträgliche Polycarbonate, werden insbesondere aromatische Polycarbonate, vor allem Polycarbonate des BisphenolA, eingesetzt.

Polycarbonate des BisphenolA sind glasklare, zähe Kunststoffe und z.B. unter der Bezeichnung Makrolon®, im Handel. Die Molekulargewichte der diesen Kunststoffen zugrunde liegenden Carbonatpolymeren liegen im Bereich von etwa 20 000 bis 40 000 und die Vicat-Erweichungstemperaturen dieser Kunststoffe, gemessen nach DIN 53 460, liegen bei etwa 140 Grad C.

Vorteile der Erfindung

Durch Legieren der beiden Kunststoffarten wird ein transparentes Kunststoffsystem mit anderen, insbesondere mit günstigeren Eigenschaften erhalten, als sie die Einzelkunststoffe vor dem Legieren zeigen. Beispielsweise kann die thermoplastische Verarbeitung des Poly-BisphenolA-Carbonates, das als Materialeigenschaft eine hohe Schmelzviskosität hat, durch Zulegieren von thermoplastischem Polymethacrylat-Kunststoff erleichtert werden, ohne daß andere Eigenschaften des Polycarbonates, wie dies bekanntermaßen durch Zulegieren niedermolekularer Acrylpolymerer geschieht, wesentlich verändert werden.

Die erfindungsgemäßen Polymermischungen lassen sich zu den verschiedensten Formkörpern verarbeiten. Als Beispiele seien optisch lesbare Informationsträger genannt. Die heute zu deren Herstellung verwendeten Materialien, BisphenolA-Polycarbonat und Polymethylmethacrylat, verursachen Probleme bezüglich optischer Doppelbrechung bzw. Wasseraufnahme. Hier zeigen die erfindungsgemäßen Materialien deutliche Vorteile.

Beispiel 1

Herstellung eines Copolymerisats

In 92 Gewichtsteilen Methylmethacrylat (MMA) werden unter leichtem Erwärmen zunächst 8 Gew.-Teile N-Cyclohexylmethacrylamid (CHMAA), anschließend 0,2 Gew.-Teile Dilauroylperoxid (Initiator) und 1 Gew.-Teil 2-Ethylhexylthioglykolat (Molekulargewichtsregler) gelöst. Diese Lösung wird in einem Folienschlauch im Wasserbad 22 Stunden bei 50 Grad C polymerisiert und zur Endpolymerisation 3 Stunden bei 110 Grad C im Trockenschrank getempert. Das resultierende Copolymerisat, das zur Herstellung von Polymerlegierungen gemäß Beispiel 2-5 eingesetzt wurde, ist farblos und glasklar, und hat ein mittleres Molekulargewicht (Mw) von 64 000.
Die in den Beispielen 6-10 eingesetzten Copolymerisate wurden unter Abwandlung der Comonomerkomponente und der Menge des Reglers analog hergestellt.

Beispiele 2-5

Makrolon®1158 und das gemäß Beispiel 1 hergestellte Copolymerisat werden in den angegebenen Mengenverhältnissen gemischt und auf einem Stork-Einschneckenextruder gemeinsam granuliert. Aus dem resultierenden Gleichkorngranulat werden auf einer Anker-Spritzgußmaschine 3 mm dicke Prüfplatten gespritzt. An den Platten wird eine visuelle Prüfung und die Messung der Vicat-Erweichungstemperatur nach DIN 53 460 durchgeführt.

| Beispiel Nr. | Makrolon / Copolymerisat Gew.-Teile | Aussehen des Spritzlings | VET °C |
|---|---|---|---|
| 2 | 20 / 80 | glasklar, farblos | 115 |
| 3 | 40 / 60 | " " | 118 |
| 4 | 60 / 40 | " " | 123 |
| 5 | 80 / 20 | " " | 130 |

Beispiel 6

Makrolon® 1189 wird mit einem Copolymerisat aus 92 Gew.-Teilen MMA und 8 Gew.-Teilen N-Phenylmethacrylamid (MG = 36 000) im Verhältnis 75 : 25 gemischt und auf einem Stork-Einschneckenextruder zu einer 2 mm dicken Platte extrudiert.
Die Platte ist farblos und klar, die VET beträgt 127 Grad C.

Beispiel 7

Makrolon® 1158 wird mit einem Copolymerisat aus 94 Gew.-Teilen MMA und 6 Gew.-Teilen N-Benzylmethacrylamid (Molekulargewicht = 110 000) im Verhältnis 50 : 50 gemischt und auf einem Einschneckenextruder zu einer 3 mm dicken Platte extrudiert.
Auch diese Platte ist farblos und klar, und zeigt eine Vicat-Erweichungstemperatur von 122 Grad C.

Beispiel 8

Ersetzt man das in Beispiel 7 beschriebene Copolymerisat durch ein solches aus 92 Gew.-Teilen MMA und 8 Gew.-Teilen N-(2-Thiazolyl)methacrylamid mit einem Molekulargewicht von 80 000, so resultiert bei sonst gleicher Verfahrensführung eine klare Platte mit leichtem Gelbstich.

Beispiel 9

Makrolon® 2800 wird mit einem Copolymerisat aus 94 Gew.-Teilen MMA und 6 Gew.-Teilen Cyclohexylmethacrylamid (Molekulargewicht = 34 000) im Verhältnis 80 : 20 gemischt und auf einem Einschneckenextruder granuliert. Das Granulat wird zu 3 mm-Platten und Normkleinstäben verspritzt. Die Prüfkörper sind farblos und klar. An den Platten wurde die VET zu 132 Grad C bestimmt. Der an den Normkleinstäben durchgeführte Schlagversuch nach DIN 53 453 ergibt keinen Bruch.

Beispiel 10

Ein Copolymerisat aus 85 Gew.-Teilen Methylmethacrylat und 15 Gew.-Teilen N-Benzylmethacrylamid (Molekulargewicht = 106 000) wird mit Makrolon® 1158 im Verhältnis 75 : 25 gemischt und granuliert. Aus dem Granulat wird bei 180 Grad C eine 4 mm dicke Fließpreßplatte hergestellt, und ein aus dieser geschnittener Streifen monoaxial 50 % gereckt. Die an diesem Streifen gemessene Doppelbrechung liegt mit $+5 \bullet 10^{-5}$ weit unter den Werten, die bei gleicher Herstellung der Prüfkörper an PMMA ($-1{,}4 \bullet 10^{-4}$) und Makrolon ($+ 2{,}5\ 10^{-3}$) gefunden werden. (Diese Polymerlegierung ist zur Herstellung optisch lesbarer Datenträger hervorragend geeignet).
Die erfindungsgemäßen, transparenten Polymermischungen, wie sie u.a. in den Beispielen beschrieben sind, genügen den Kriterien nach der "Transition Temperature Method" und der "Optical Method", wie sie für verträgliche Polymermischungen gefordert und im Kapitel 'Compatible Polymers' in Polymer Handbook, Second Edition, Copyright ©, 1975, by John Wiley & Sons; III, 211, beschrieben sind.

## Patentansprüche

**1.** Transparente, thermoplastisch verarbeitbare Polymermischung bestehend aus (A) einem aromatischen Polycarbonat und (B) einem Methacrylat-Copolymerisat,

dadurch gekennzeichnet,

daß das Copolymerisat (B)

1. aus 65 bis 95 Gew.-% Methylmethacrylateinheiten und gegebenenfalls weiteren $\alpha,\beta$-ungesättigten Monomereinheiten in Mengen von 0 bis 20 Gew.-% und

2. aus 5 bis 25 Gew.-% monosubstituierten (Meth)acrylamideinheiten aus Monomeren der allgemeinen Formel

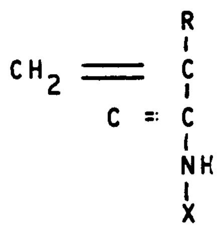

in der R Wasserstoff oder ein Methylrest und X ein organischer Rest eines cyclischen, gegebenenfalls substituierten Moleküls mit aliphatischer oder aromatischer oder heterocyclischer Struktur ist und der organische cyclische Rest kein ausgeprägtes Absorptionsvermögen für sichtbares Licht bis hin zur Ultraviolettstrahlung von 340 nm hat,
und X

a) kein 2-Hydroxyphenyl-benzotriazol-Rest bzw. Derivate

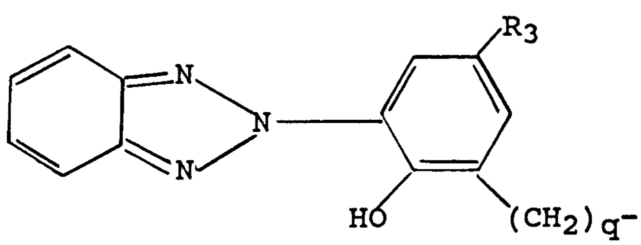

worin $R_3$ für Wasserstoff oder einen gegebenenfalls verzweigten Alkylrest mit 1 bis 12 C-Atomen und q für null oder für eine Zahl von 1 bis 4 stehen kann, steht, und

b) kein 2-Hydroxybenzo- oder -acetophenon-Rest

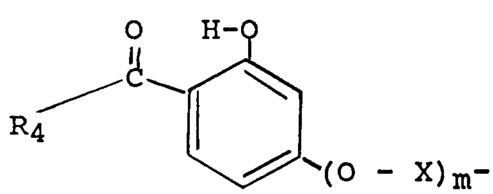

worin m für 0 oder 1 und X für einen gegebenenfalls mit Hydroxygruppen substiuierten Alkylrest mit 1 bis 4 Kohlenstoffatomen und $R_4$ für einen gegebenenfalls substituierten Phenyl- oder Methylrest steht, ist,

besteht und

3. ein Molekulargewicht über 30 000 hat.

2. Transparente, thermoplastisch verarbeitbare Polymermischung gemäß Anspruch 1, dadurch gekennzeichnet, daß der organische Rest X der (Meth)acrylamideinheit ein gegebenenfalls methylsubstituierter Cyclohexylrest ist.

3. Transparente, thermoplastisch verarbeitbare Polymermischung gemäß Anspruch 1, dadurch gekennzeichnet, daß der organische Rest X der (Meth)acrylamideinheit ein Benzylrest ist.

4. Transparente, thermoplastisch verarbeitbare Polymermischung gemäß den Ansprüchen 1 bis 3, dadurch gekennzeichnet, daß das Polycarbonat (A) das Polycarbonat von 2,2-Bis-(4-hydroxyphenyl)-propan ist.

5. Verwendung von Polymermischungen gemäß den Ansprüchen 1 bis 4 für die Herstellung optisch lesbarer Informationsträger.

## Claims

1. A transparent, thermoplastically processable polymer mixture comprising (A) an aromatic polycarbonate and (B) a methacrylate copolymer, characterised in that the copolymer (B)
   1. is composed of 65 to 95% by weight methyl-methacrylate units and optionally further $\alpha$-$\beta$-unsaturated monomer units in quantities of 0 to 20% by weight and
   2. 5 to 25% by weight monosubstituted (meth)acrylamide units of monomers of the general formula

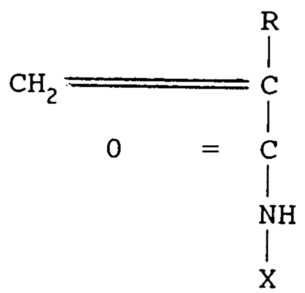

wherein R is hydrogen or a methyl group and X is an organic group of a cyclic, optionally substituted molecule of aliphatic or aromatic or heterocyclic structure, and the organic cyclic group does not possess a pronounced absorption capacity for visible light into the UV radiation range of 340 nm
and X
(a) is not a 2-hydroxyphenyl-benzotriazole residue or derivative.

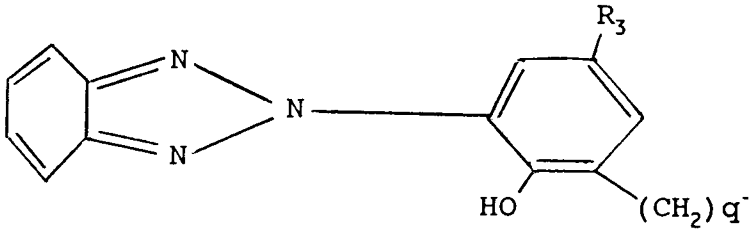

wherein $R_3$ is hydrogen or an optionally branched alkyl group containing 1 to 12 C-atoms, and q is 0 or a number from 1 to 4 and
(b) is not a 2-hydroxybenzo- or -acetophenone group

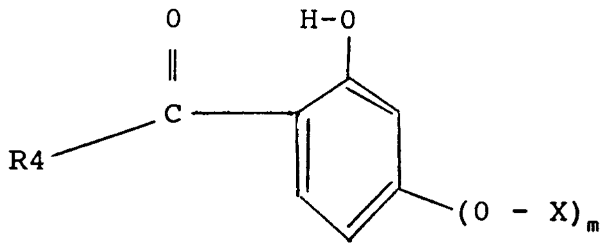

wherein m is 0 or 1 and X is an alkyl group containing 1 to 4 carbon atoms, optionally substituted with hydroxyl groups, and $R_4$ is an optionally substituted phenyl or methyl group, and

3. has a molecular weight of greater than 30,000.

**2.** A transparent, thermoplastically processable polymer mixture as claimed in Claim 1, characterised in that the organic group X of the (meth)acrylamide unit is an optionally methyl-substituted cyclohexyl group.

**3.** A transparent, thermoplastically processable polymer mixture as claimed in Claim 1, characterised in that the organic group X of the (meth)acrylamide unit is a benzyl group.

**4.** A transparent, thermoplastically processable polymer mixture as claimed in Claims 1 to 3, characterised in that the polycarbonate (A) is the polycarbonate of 2,2-bis-(4-hydroxyphenyl)-propane.

**5.** The use of polymer mixtures as claimed in Claims 1 to 4 for the production of optically readable data carriers.

**Revendications**

**1.** Mélange de polymères transparent, transformable de manière thermoplastique, se composant: (A) d'un polycarbonate aromatique et (B) d'un copolymère de méthacrylate, caractérisé en ce que le copolymère (B) est composé

1. de 65 à 95% en poids de motifs méthacrylate de méthyle et éventuellement d'autres motifs monomères $\alpha,\beta$-insaturés dans des proportions de 0 à 20% en poids, et

2. de 5 à 25% en poids de motifs (méth)acrylamide monosubstitué constitués par des monomères de formule générale

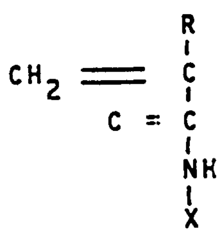

dans laquelle R est un atome d'hydrogène ou un reste méthyle et X est un reste organique d'une molécule cyclique éventuellement substituée, de structure aliphatique, aromatique ou hétérocyclique, et le reste organique cyclique n'a pas de pouvoir absorbant marqué pour la lumière visible jusqu'au rayonnement ultraviolet de 340 nm,

et X

a) n'est pas un reste ou dérivé de 2-hydroxyphényl-benzotriazole

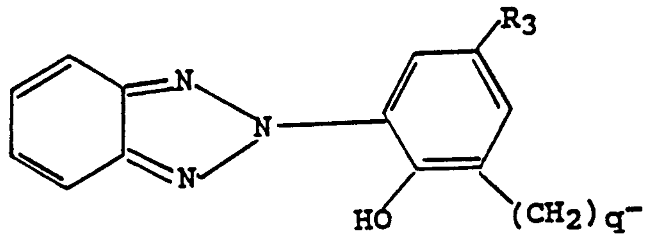

où $R_3$ peut être mis pour un atome d'hydrogène ou pour un reste alkyle à 1-12 atomes de carbone éventuellement ramifié et q pour 0 ou pour un nombre de 1 à 4, et

b) n'est pas un reste 2-hydroxybenzo- ou -acétophénone

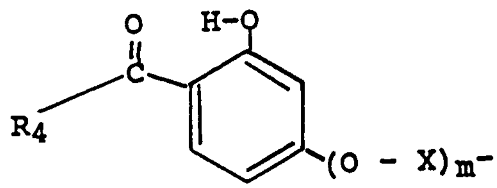

où m est mis pour 0 ou 1, X est mis pour un reste alkyle à 1-4 atomes de carbone, éventuellement substitué par des groupements hydroxy, et $R_4$ est mis pour un reste phényle ou méthyle éventuellement substitué, et

3. en ce qu'il a un poids moléculaire de plus de 30 000.

**2.** Mélange de polymères transparent, transformable de manière thermoplastique selon la revendication 1, caractérisé en ce que le reste organique X du motif (méth)acrylamide est un reste cyclohexyle éventuellement substitué par un groupement méthyle.

**3.** Mélange de polymères transparent, transformable de manière thermoplastique selon la revendication 1, caractérisé en ce que le reste organique X du motif (méth)acrylamide est un reste benzyle.

**4.** Mélange de polymères transparent, transformable de manière thermoplastique selon l'une quelconque des revendications 1 à 3, caractérisé en ce que le polycarbonate (A) est le polycarbonate de 2,2-bis-(4-hydroxyphényl)-propane.

**5.** Utilisation de mélanges de polymères selon l'une quelconque des revendications 1 à 4 pour la fabrication de supports d'informations lisibles optiquement.